# EUROPEAN PATENT SPECIFICATION

(11) **EP 0 228 836 B1**
(45) Date of publication and mention of the grant of the patent: **13.01.1993**
(21) Application number: 86309567.5
(22) Date of filing: 09.12.1986
(51) Int. Cl.: B01D 63/00, F16J 13/12

(54) **Threaded end enclosure**
Gehäuseende mit Gewinde
Carter à extrémité filetée

(30) Priority: 10.12.1985 US 807256; 18.02.1986 US 830622
(43) Date of publication of application: 15.07.1987
(73) Proprietor: ALBANY INTERNATIONAL CORP., Albany, New York 12204 (US)
(72) Inventor: Coplan, Myron J., Natick Massachusetts 01760 (US)
(74) Representative: Bardo, Julian Eason

(56) References cited:
- EP-A- 0 104 958
- FR-A- 2 110 517
- GB-A- 1 020 090
- GB-A- 2 134 088
- US-A- 3 021 974
- US-A- 3 214 181
- US-A- 3 498 909
- US-A- 3 695 446
- US-A- 4 384 655
- US-A- 4 594 161

## Description

This invention pertains to separatory module devices, and more particularly to a pressure shell for a membrane separatory module system.

The use of membranes to effect separation of gas/gas, liquid/liquid, and liquid/solid mixtures and solutions has achieved general industrial applicability by various methods, among them being ultra filtration, hyper filtration, reverse osmosis, and dialysis. In general, membrane elements associated with these processes are contained in vessels called modules, comprising a shell having various inlet and outlet ports and having an assembly of membranes within said shell. The internal configurations are so arranged as to permit the introduction of the feed stream with or without pressure on the upstream face of the membranes, means for collecting permeate which passes through the membranes and emerges on their downstream faces and means for keeping permeate materials from co-mingling.

One form of separatory module, in which the membrane elements are hollow fibres, and a method of its fabrication are disclosed in US-A-4,207,192.

In prior art devices employing hollow fibres, separatory module shells have generally comprised a cylindrical shell enclosing the hollow separatory fibres and spaces for flow paths for the fluid to be separated. Various materials have been used in the composition of these pressure shells in order to accommodate the exceedingly high pressures involved in hollow fibre separation techniques. These pressures are commonly of the order of 200 to 2000 psi (1.38 to 13.8 MNm⁻²). Occasionally pressures as high as 5000 psi (34.5 MNm⁻²) have been contemplated. The shells are generally closed at their ends by plates of sufficient strength to withstand the high internal pressures employed in the separation process. The plates may be secured to the shells by various means such as by bolts embedded in shell ends. Alternatively, the walls of the pressure shell may be expanded at their ends to provide means for installing retaining rings or the like. In other variations of the prior art the ends of the pressure shells have grooves machined into their inner surface to accommodate split circle elements or snap rings.

EP-A-0 104 958 discloses a pressure shell for housing a membrane separatory system, the pressure shell comprising a filament-reinforced, generally cylindrical, hollow body. In order to enable end closures to be secured to the opposite ends of the hollow body, rigid rings are positioned at the ends and longitudinally extending filaments are wrapped around the ends forming projections at the ends which can be engaged by the end closures.

FR-A-2 110 517 discloses separation apparatus for purifying water by a two stage procedure involving reverse osmosis and ion exchange. The reverse osmosis module is contained in a cylindrical housing having an externally threaded portion at one end upon which is screwed an end cap containing a central aperture through which purified water is able to leave the housing.

GB-A-1 020 090 describes a bolt or screw that may be used as an electrically insulating connecting element that is made of a synthetic plastics material having glass fibre reinforcement. Various forms of glass fibre reinforcement are described and the reinforcement comprises a cylindrical sleeve coaxial with the bolt or folded axially directed strips. The strips or sleeve include radially extending fibres.

An object of the present invention is to provide an improved form of pressure shell for use in fluid separation.

The present invention provides a pressure shell for housing a membrane separatory system, the pressure shell comprising a filament-reinforced, generally cylindrical, hollow body having first and second opposite ends, a first end closure closing off the first end of the hollow body and having at least one aperture for allowing fluid communication between the interior and exterior of the pressure shell, and a second end closure closing off the second end of the hollow body, characterised in that the filament reinforcement of the hollow body comprises filaments wound over needle felt on the interior of the hollow body, and in that the ends of the interior of the hollow body are threaded and the first and second end closures comprise first and second externally threaded end plugs which are secured to the first and second ends of the hollow body by screw threaded engagement with the threaded ends of the interior of the hollow body.

Sealing means may be provided on each end plug, and may be disposed on a forward edge of each end plug.

The first end plug may have three apertures having hollow cylindrical portions extending outwardly from the end plug. Each end plug may comprise a ring having an externally threaded surface adapted threadingly to engage a threaded end of the hollow body and a plug member supported against said ring and having sealing means co-operating with said hollow body. The externally threaded ring may be thick-walled, engaging with the internally threaded shell to provide an annular, shoulder-like, supporting shelf for the unthreaded plug member. The plug member may contain at least two openings adapted to pass working fluid, and the sealing means may comprise an O-ring seal.

The hollow body may comprise a composite wound glass filament epoxy tube, having a wall thickness selected for the desired pressure rating, internal threads being formed on the cylindrical surface of both ends of the body. The threaded end plugs are adapted to be threadingly engaged to the cylindrical pressure shell to provide a secure pressure resistant end closure therefor. The threaded bond between an end plug and the pressure shell/shell wall can be adapted to withstand operating pressures of the order of 2000+ psi (13.8MNm⁻²).

By way of example, pressure shells will be described with reference to the accompanying drawings, in which:
- Fig. 1: is a perspective view of an externally threaded end plug and an internally threaded pressure shell;
- Fig. 2: is a side elevation view of an externally threaded end plug and a section view of an end of a pressure shell;
- Fig. 3: is a detailed sectional view showing an O-ring seal forming part of a pressure shell;
- Fig. 4: is a sectional view of a pressure shell constructed in accordance with the invention along an entire length thereof, both ends being internally threaded and of greater diameter, and
- Fig. 5: is a sectional view of a different form of pressure shell.

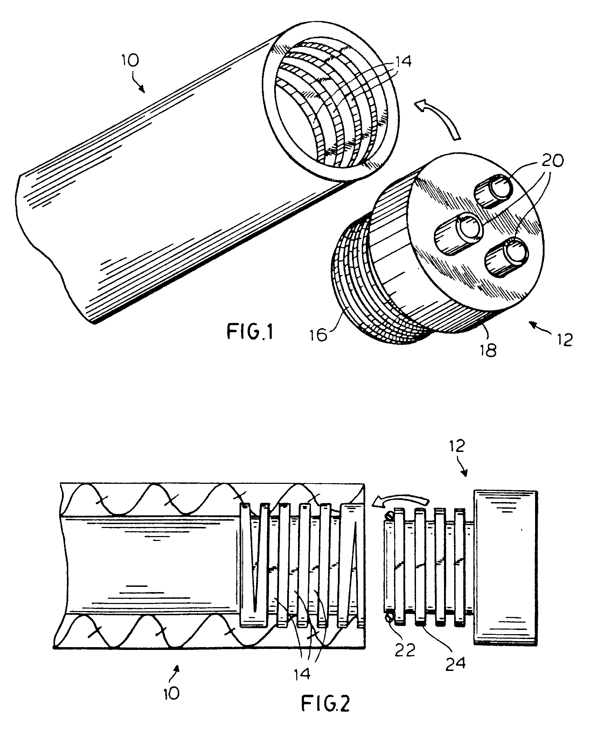

Fig. 1 illustrates a cylinder 10 and an end plug 12. Cylinder 10 includes internal threads 14 on each end thereof. The cylinder 10 is composed of a fibre reinforced plastic pressure shell. It is a filament wound fibreglass shell of reinforced epoxy. Addition of a pigment to the shell is optional. This cylinder may be manufactured by wrapping needle felt on a steel mandrel, winding on thread (preferably fibreglass yarn) and saturating with epoxy. Additional layers of application may be added to build up the pressure shell for high pressure applications. The wall thickness is made to design requirements based upon the pressure rating. Generally a minimum wall thickness of 0.21" (0.53 cm) is required.

End plug 12 includes external thread 16, cap 18 and three aperture cylinders 20. Threads 16 may be acme threads although the drawing shows buttress threads. Cylinder apertures 20 provide means for passing feed, concentrate and permeate from within the pressure shell and within the hollow fibres to the exterior of the shell to a collecting means.

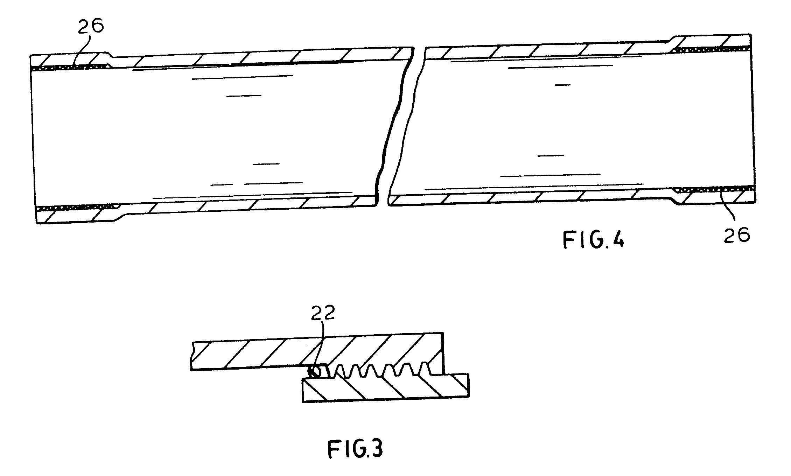

Fig. 2 shows an O-ring seal 22 which seals end plug 12 to the interior wall of cylinder 10. The O-ring is circumferentially located about end plug 12 at a portion below the last thread 24 as shown in Fig. 2. Fig. 3 is a detailed view of the O-ring to interior cylinder wall seal.

Fig. 4 illustrates an entire cylinder 10 having threads at each end and having an expanded diameter to accommodate the threads. End plugs, not shown, are adapted to be sealingly inserted into threaded portions 26.

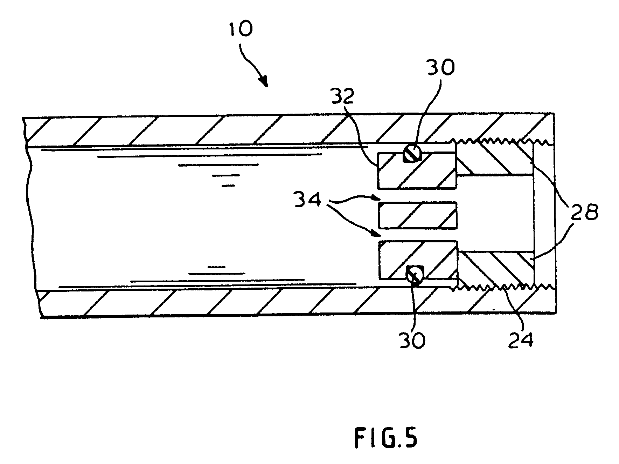

Fig. 5 illustrates one embodiment wherein a thick wall threaded ring 28 engages shell 10 by threads 24, generating a supporting shelf whereby a cylindrical unthreaded plug member 32 is retained against fluid pressure. "O" ring 30 seals against said pressure, and drillings 34 in said plug provide access means for feed fluid, concentrate, or permeate.

The screw-in end plug 12 or ring 28 and plug member 32 described above eliminate the need for snap-rings, etc., which have previously been used in closing the ends of pressure shells and eliminate the necessity of exactly positioning such rings demanded by the high pressure separation usage.

## Claims

1. A pressure shell for housing a membrane separatory system, the pressure shell comprising a filament-reinforced, generally cylindrical, hollow body (10) having first and second opposite ends, a first end closure (12 or 28, 32) closing off the first end of the hollow body and having at least one aperture (20) for allowing fluid communication between the interior and exterior of the pressure shell, and a second end closure (12 or 28, 32) closing off the second end of the hollow body, characterised in that the filament reinforcement of the hollow body (10) comprises filaments wound over needle felt on the interior of the hollow body (10), and in that the ends of the interior of the hollow body (10) are threaded and the first and second end closures (12 or 28, 32) comprise first and second externally threaded end plugs which are secured to the first and second ends of the hollow body (10) by screw threaded engagement with the threaded ends of the interior of the hollow body.

2. A pressure shell as claimed in claim 1, further comprising a sealing means (22) on each end plug (12).

3. A pressure shell as claimed in claim 2, wherein the sealing means (22) is disposed on a forward edge of each end plug (12).

4. A pressure shell as claimed in any one of claims 1 to 3, wherein the first end plug (12) has three apertures (20) having hollow cylindrical portions extending outwardly from the end plug.

5. A pressure shell as claimed in claim 1, wherein each end plug (28, 32) comprises a ring (28) having an externally threaded surface adapted threadingly to engage a threaded end of the hollow body (10) and a plug member (32) supported against said ring and having sealing means (30) co-operating with said hollow body.

6. A pressure shell as claimed in claim 5, wherein the ring (28) is a thick-walled ring, providing an annular supporting shelf for the plug member (32).

7. A pressure shell as claimed in claim 5 or claim 6, wherein the plug member contains at least two openings (34) adapted to pass working fluid.

8. A pressure shell as claimed in any one of claims 5 to 7, wherein the sealing means (30) comprises an O-ring seal.

## Patentansprüche

1. Ein Druckgefäß für die Unterbringung eines Membrantrennsystems, welches Druckgefäß einen faserverstärkten, generell zylindrischen Hohlkörper (10) umfaßt mit einem ersten und einem zweiten Ende, die einander abgekehrt sind, einem ersten Endverschluß (12 oder 28, 32), der das erste Ende des Hohlkörpers absperrt und mindestens eine Öffnung (20) aufweist zum Ermöglichen der Fluidkommunikation zwischen dem Inneren und dem Äußeren des Druckgefäßes, und mit einem zweiten Endverschluß (12 oder 28, 32), der das zweite Ende des Hohlkörpers verschließt, dadurch **gekennzeichnet**, daß die Faserverstärkung des Hohlkörpers (10) Fasern umfaßt, die auf Nadelfilz auf der Innenseite des Hohlkörpers (10) gewickelt sind, und daß die Enden des Inneren des Hohlkörpers (10) mit Gewinde versehen sind und der erste und zweite Endverschluß (12 oder 28, 32) einen ersten und einen zweiten mit Außengewinde versehenen Endstopfen umfassen, die an dem ersten beziehungsweise zweiten Ende des Hohlkörpers (10) durch Schraubeingriff mit den mit Gewinden versehenen Enden des Inneren des Hohlkörpers befestigt sind.

2. Ein Druckgefäß nach Anspruch 1, ferner umfassend ein Dichtmittel (22) an jedem Endstopfen (12).

3. Ein Druckgefäß nach Anspruch 2, bei dem das Dichtmittel (22) auf einer vorderen Kante jedes Endstopfens (12) angeordnet ist.

4. Ein Druckgefäß nach einem der Ansprüche 1 bis 3, bei dem der erste Endstopfen (12) drei Öffnungen (20) mit hohlzylindrischen Abschnitten umfaßt, die sich von dem Endstopfen nach außen erstrecken.

5. Ein Druckgefäß nach Anspruch 1, bei dem jeder Endstopfen (28, 32) einen Ring (28) umfaßt mit einer Außengewindeoberfläche, die in ein Gewindeende des Hohlkörpers (10) einschraubbar ist, und ein Stopfenglied (32) umfaßt, das gegen den Ring abgestützt ist, und Dichtmittel (30) umfaßt, die mit dem Hohlkörper zusammenwirken.

6. Ein Druckgefäß nach Anspruch 5, bei dem der Ring (28) ein dickwandiger Ring ist, der einen ringförmigen abstützenden Absatz für das Stopfenglied (32) bildet.

7. Ein Druckgefäß nach Anspruch 5 oder 6, bei dem das Stopfenglied mindestens zwei Öffnungen (34) für den Durchlaß von Arbeitsfluiden aufweist.

8. Ein Druckgefäß nach einem der Ansprüche 5 bis 7, bei dem das Dichtmittel (30) eine O-Ringdichtung umfaßt.

## Revendications

1. Une enveloppe sous pression destinée à loger un système séparateur à membrane, l'enveloppe sous pression comprenant un corps creux, généralement cylindrique (10), armé de filaments, comprenant une première et une deuxième extrémités opposées, une fermeture de première extrémité (12 ou 28, 32) fermant la première extrémité du corps creux et présentant au moins une ouverture (20) pour permettre une communication de fluide entre l'intérieur et l'extérieur de l'enveloppe sous pression, et une fermeture de deuxième extrémité (12 ou 28, 32) fermant la deuxième extrémité du corps creux, caractérisée en ce que l'armature en filaments du corps creux (10) comprend des filaments enroulés au-dessus d'un feutre aiguilleté sur l'intérieur du corps creux (10), et en ce que les extrémités de l'intérieur du corps creux (10) sont filetées et les fermetures des première et de deuxième extrémités (12 ou 28, 32) comprennent un premier et un deuxième bouchon d'extrémité filetés extérieurement qui sont fixés sur la première et la deuxième extrémités du corps creux (10) par vissage avec les extrémités filetées de l'intérieur du corps creux.

2. Une enveloppe sous pression selon la revendication 1, comprenant en outre un moyen d'étanchéité (22) sur chaque bouchon d'extrémité (12).

3. Une enveloppe sous pression selon la revendication 2, dans laquelle le moyen d'étanchéité (22) est disposé sur un bord avant de chaque bouchon d'extrémité (12).

4. Une enveloppe sous pression selon l'une quelconque des revendications 1 à 3, dans laquelle le bouchon de première extrémité (12) comporte trois ouvertures (20) présentant des parties cylindriques creuses s'étendant vers l'extérieur à partir du bouchon d'extrémité.

5. Une enveloppe sous pression selon la revendication 1, dans laquelle chaque bouchon d'extrémité (28, 32) comprend une bague (28) à surface filetée extérieurement adaptée à se visser sur une extrémité filetée du corps creux (10) et un organe de bouchon (32) supporté contre ladite bague et comprenant un moyen d'étanchéité (30) coopérant avec ledit corps creux.

6. Une enveloppe sous pression selon la revendication 5, dans laquelle la bague (28) est une bague à paroi épaisse, constituant pour l'organe de bouchon (32) un rebord annulaire de support.

7. Une enveloppe sous pression selon la revendication 5 ou la revendication 6, dans laquelle l'organe de bouchon contient au moins deux ouvertures (34) aptes à laisser passer un fluide de travail.

8. Une enveloppe sous pression selon l'une quelconque des revendications 5 à 7, dans laquelle le moyen d'étanchéité (30) comprend un joint torique.
